# EUROPEAN PATENT APPLICATION

(11) **EP 4 174 608 A1**
(43) Date of publication of application: **03.05.2023**
(21) Application number: 21829425.4
(22) Date of filing: 24.06.2021
(51) Int. Cl.: G05D 1/02, G06K 7/08, G06K 7/10, G06K 19/06, G06K 19/07, G06K 19/14

(54) **MARKER SYSTEM AND MAGNETIC MARKER DETECTION METHOD**

(30) Priority: 26.06.2020 JP 2020110862
(71) Applicant: Aichi Steel Corporation, Tokai-shi, Aichi 476-8666 (JP)
(72) Inventor: YAMAMOTO Michiharu, Tokai-shi, Aichi 476-8666 (JP); NAGAO Tomohiko, Tokai-shi, Aichi 476-8666 (JP); AOYAMA Hitoshi, Tokai-shi, Aichi 476-8666 (JP)
(74) Representative: Viering, Jentschura & Partner mbB Patent- und Rechtsanwälte
(86) International application number: PCT/JP2021/024024
(87) International publication number: WO 2021/261569

(57) **Abstract**

In a marker system (1) which includes a plurality of magnetic markers (10) disposed on a road surface for driving assist control of a vehicle (5) including automatic traveling control and in which a wireless tag is affixed to a partial magnetic marker (10A) of the plurality of magnetic markers (10), a sign (1M) for distinguishing between a partial magnetic marker (10A) with a wireless tag affixed thereto and another magnetic marker (10B) without a wireless tag affixed thereto is provided. Thus, it is possible to associate the detected magnetic marker (10) and the wireless tag as a transmission source of tag waves with each other with high reliability.

## Description

### TECHNICAL FIELD

The present invention relates to a marker system including magnetic markers disposed on a road and a method of detecting the magnetic markers.

### BACKGROUND ART

Conventionally, magnetic markers disposed on a road have been known (for example, refer to Patent Literature 1). The magnetic markers can be detected by using, for example, a magnetic sensor included in a vehicle. For example, by using the magnetic markers arranged along a lane, automatic driving can be achieved, as well as various driving assists such as automatic steering control and lane departure warning.

Since information which a single magnetic marker can provide to a vehicle side is not much sufficiently, a magnetic marker retaining a wireless tag that can provide information via wireless communication has also been suggested (for example, refer to Patent Literature 2). For example, by combining a wireless tag that provides position information with a magnetic marker, a subject vehicle position (position of a subject vehicle) can be accurately identified when the vehicle detects the magnetic marker.

### CITATION LIST

### PATENT LITERATURE

Patent Literature 1: Japanese Unexamined Patent Application Publication No. 2018-010356
Patent Literature 2: Japanese Unexamined Patent Application Publication No. 2019-215636

### SUMMARY OF INVENTION

### TECHNICAL PROBLEM

In general, a range which tag waves transmitted from the wireless tag reach is significantly wider than a magnetic field in which a magnetic marker acts on its surroundings. Thus, there is a problem that, when the vehicle detects any magnetic marker during receiving tag waves, it is difficult to determine whether the wireless tag as a transmission source of the received tag waves is affixed to the detected magnetic marker.

The present invention was made in view of the above-described conventional problem, with a marker system in which a wireless tag is affixed to part of magnetic markers disposed on a road, and is to provide the marker system and a detection method capable of determining with high reliability whether the tag waves being received are from the wireless tag affixed to the detected magnetic marker when a vehicle detects any magnetic marker while receiving tag waves.

### SOLUTION TO PROBLEM

One mode of the present invention resides in a marker system which includes a plurality of magnetic markers disposed on a road surface for driving assist control of a vehicle including automatic traveling control, wherein
a wireless tag capable of outputting information via wireless communication is affixed to a partial magnetic marker which is part of the plurality of magnetic markers, and
the marker system includes a sign for distinguishing between the partial magnetic marker with the wireless tag affixed thereto and another magnetic marker of the plurality of magnetic markers except the partial magnetic marker.

One mode of the present invention resides in a magnetic marker detection method for detecting a magnetic marker disposed on a road surface for driving assist control of a vehicle including automatic traveling control,
a wireless tag capable of outputting information via wireless communication affixed to a partial magnetic marker which is part of a plurality of magnetic markers disposed on the road surface, the method including:
a process of magnetically detecting the magnetic marker;
a process of obtaining information outputted from the wireless tag affixed to the magnetic marker; and
a process of detecting a sign provided to distinguish between the partial magnetic marker with the wireless tag affixed thereto and another magnetic marker of the plurality of magnetic markers except the partial magnetic marker, wherein
when the magnetic marker is detected and the sign is detected, information obtained from the wireless tag is associated with the detected magnetic marker.

### Advantageous Effects of Invention

In the present invention, the sign is provided to distinguish between the partial magnetic marker with the wireless tag affixed thereto and the other magnetic marker. Thus, by using this sign, it is possible to identify the partial magnetic marker with the wireless tag affixed thereto. On the vehicle side, when any magnetic marker is detected while waves from the wireless tag are being received, by using the sign, it is possible to determine with high reliability whether the wireless tag as a transmission source of electric waves being received is affixed to the detected magnetic marker.

As described above, according to the present invention, in the marker system in which the wireless tag is affixed to part of the magnetic markers disposed on the road, it is possible to identify with high reliability the magnetic marker corresponding to the wireless tag as a transmission source of electric waves.

### BRIEF DESCRIPTION OF DRAWINGS

FIG. 1 is a drawing depicting a magnetic marker in the first embodiment.
FIG. 2 is a descriptive diagram depicting a vehicle traveling on a lane where magnetic markers are disposed in the first embodiment.
FIG. 3 is a block diagram depicting the electrical configuration of the vehicle in the first embodiment.
FIG. 4 is a flow diagram depicting a flow of a process by a control unit outputting a subject vehicle position in the first embodiment.
FIG. 5 is a descriptive diagram of a second process in the first embodiment.
FIG. 6 is a descriptive diagram depicting a vehicle traveling on a road with a plurality of lanes in the first embodiment.
FIG. 7 depicts descriptive diagrams depicting another sign of a tag-equipped marker in the first embodiment.
FIG. 8 depicts descriptive diagrams of another tag-equipped marker and tag-unequipped markers in the first embodiment.
FIG. 9 depicts descriptive diagrams of another tag-equipped marker and tag-unequipped markers in the first embodiment.
FIG. 10 depicts descriptive diagrams depicting another tag-equipped marker in the first embodiment.
FIG. 11 is a descriptive diagram depicting another sign of the tag-equipped marker in the first embodiment.
FIG. 12 is a descriptive diagram of a sign of a tag-equipped marker in a second embodiment.

### DESCRIPTION OF EMBODIMENTS

Embodiments of the present invention are specifically described by using the following embodiments.

### (FIRST EMBODIMENT)

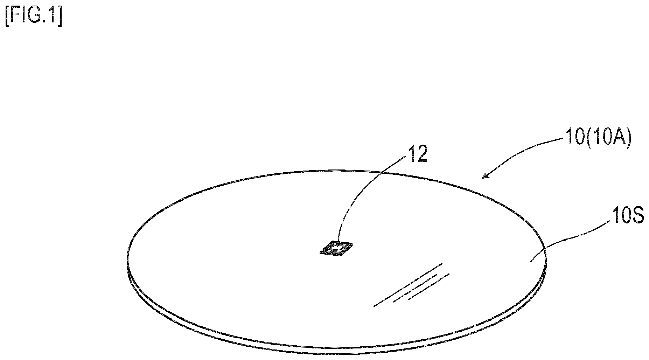

The present embodiment is an example regarding marker system 1 including a plurality of magnetic markers 10 disposed on a road surface for driving assist control of a vehicle including automatic traveling control. The details of this are described by using FIG. 1 to FIG. 11.

Magnetic marker 10 (FIG. 1) is formed of flat, circular magnet sheet 10S having a diameter of 100 mm and a thickness of 2 mm. Magnet sheet 10S is an isotropic ferrite rubber magnet having a maximum energy product (BHmax) of approximately 6.4 kJ/m³. Magnetic marker 10 can be adhesively joined onto, for example, a road surface. As an adhesive, for example, asphalt in a molten state or a softened state may be used. In magnetic marker 10, one surface is at the N pole and the other surface is at the S pole. This magnetic marker 10 has magnetic polarity detectable on a vehicle 5 side switched in accordance with which surface is opposed to the road surface. Note that magnetic polarity detectable on the vehicle 5 side is represented as magnetic polarity of magnetic marker 10.

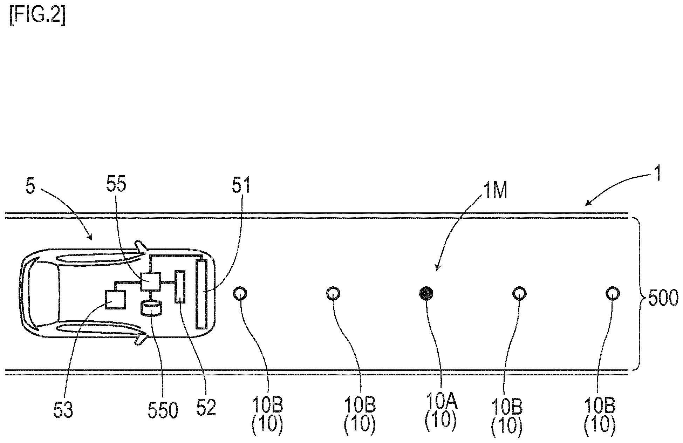

In marker system 1, RFID tag (wireless tag) 12 is affixed to part of magnetic markers 10. RFID tag 12 constitutes a sheet shape, and is laminated and disposed on the surface of magnetic marker 10. In particular, in the present embodiment, RFID tag 12 is laminated on the surface at the N pole of magnetic marker 10. Note that in the following description, magnetic marker 10 with RFID tag 12 affixed thereto is referred to as tag-equipped marker 10A (refer to FIG. 2) and another magnetic marker 10 with RFID tag 12 not affixed thereto is referred to as tag-unequipped marker 10B.

RFID tag 12 (FIG. 1) is an electronic component which operates in response to power supply from outside and transmits electric waves (referred to as tag waves as appropriate). RFID tag 12 stores a tag ID, which is unique information, and superposes that tag ID on tag waves for output. Although varied depending on the external factor such as the arrangement of neighboring vehicles or roadside guardrails, a range tag waves can reach is within a radius on the order of 5 to 10 m.

In marker system 1 of the present embodiment, for example, as in FIG. 2, magnetic markers 10 are arranged along the center of lane 500. For example, magnetic markers 10 arranged with 2 meter pitches can be used for various driving assists such as lane departure warning, lane keeping capability, and automatic driving. Furthermore, in this marker system 1, it is possible to identify the subject vehicle position (absolute position of the vehicle) on a vehicle 5 side by using magnetic markers 10. If the subject vehicle position can be identified on the vehicle 5 side, navigation capability can be achieved without using positioning means such as GPS (Global Positioning System).

Part of magnetic markers 10 arranged along lane 500 are tag-equipped markers 10A, and the other magnetic markers 10 are tag-unequipped markers 10B. Note that in FIG. 2, tag-equipped markers 10A is indicated by a solid circle and tag-unequipped markers 10B are each indicated by a hollow circle. One tag-equipped marker 10A is arranged, for example, for every ten magnetic markers 10. Tag-equipped marker 10A is disposed in a state in which the surface at the S pole faces an underground side so that the surface at the N pole on a side retaining RFID tag 12 is oriented upward. On the other hand, tag-unequipped marker 10B is disposed in a state in which the surface at the N pole faces an underground side so that the surface at the S pole is oriented upward. In marker system 1, depending on magnetic polarity of magnetic marker 10 detectable on the vehicle 5 side, that is, magnetic polarity (N pole) on the surface of magnetic marker 10 oriented upward, it is possible to distinguish between tag-equipped marker 10A and tag-unequipped marker 10B. Magnetic marker 10 itself to be detected as the N pole on the vehicle side serves as sign 1M of tag-equipped marker 10A.

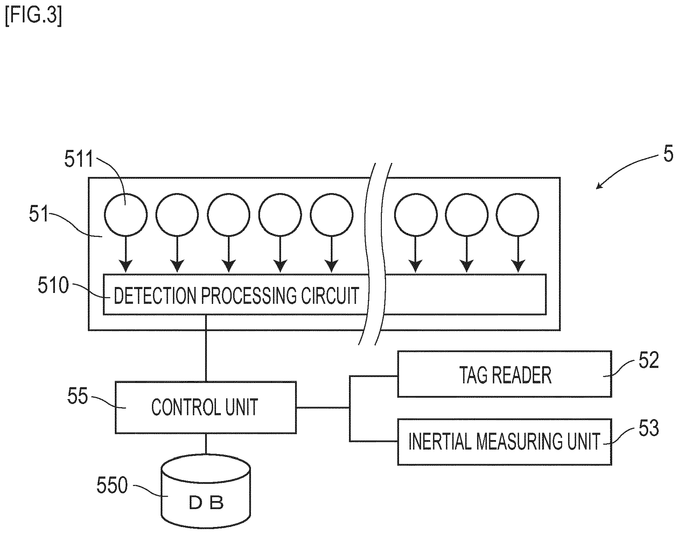

Next, the configuration of vehicle 5 using marker system 1 and a procedure for using marker system 1 by vehicle 5 are described with reference to FIG. 3.

### (Configuration of Vehicle)

Vehicle 5 includes sensor array 51 including plurality of magnetic sensors 511, tag reader 52 which receives tag waves from RFID tag 12, inertial measuring unit (IMU) 53, control unit 55 which controls sensor array 51 and tag reader 52, database 550 which stores the disposition positions (absolute positions) of magnetic markers 10, and so forth.

Sensor array 51, which is one example of a magnetic measuring part, is a unit including plurality of magnetic sensors 511 and detection processing circuit 510 which processes a magnetic measurement value of each magnetic sensor 511. In sensor array 51 forming a bar shape, for example, fifteen magnetic sensors 511 are arrayed on a straight line with constant spacing. Magnetic sensor 511 is, for example, a high-sensitive MI (Magneto Impedance) sensor.

Sensor array 51 is mounted on vehicle 5 so that a longitudinal direction goes along a vehicle-width direction and the center position matches the center of vehicle 5. When detecting any magnetic marker 10, sensor array 51 outputs an indication of detection of magnetic marker 10, magnetic polarity of magnetic marker 10, and relative lateral shift amount of vehicle 5 with respect to magnetic marker 10. This lateral shift amount can be identified by a deviation between the position directly above magnetic marker 10 in sensor array 51 and the center position of sensor array 51.

Tag reader 52 is a unit which wirelessly supplies electric power to cause RFID tag 12 to operate and receives tag waves. Tag reader 52 demodulates tag waves to read a tag ID (unique information of RFID tag 12). Note that tag reader 52 regularly performs communications with RFID tag 12 with a frequency of, for example, 3 kHz or the like, by control by control unit 55. Note that it may be configured that, in place of this, tag reader 52 performs communications with RFID tag 12 at a timing when any magnetic marker 10 is detected or a timing when arrival of tag reader 52 at RFID tag 12 is predicted.

Inertial measuring unit 53 is a unit which estimates a displacement vector of vehicle 5 by inertial navigation. Inertial measuring unit 53 includes a biaxial magnetic sensor, which is an electronic compass for measuring an azimuth, a biaxial acceleration sensor for measuring an acceleration, and a biaxial gyro sensor for measuring an angular velocity. Inertial measuring unit 53 calculates a displacement amount by double integration of acceleration and sums displacement amounts along the azimuth of vehicle 5 to calculate a displacement vector from a reference position to a movement destination. By using the displacement vector estimated by inertial measuring unit 53, the subject vehicle position after the absolute position passes over a known reference position can be estimated with high accuracy.

Database 550 is achieved by using a storage area of a storage device such as a hard disk drive or solid-state drive. In database 550, the disposition positions (absolute positions) of respective magnetic markers 10 are stored. Furthermore, as for each tag-equipped marker 10A, the absolute position of magnetic marker 10 (10A) is stored with the tag ID, which is unique information of affixed RFID tag 12, linked thereto. By referring to database 550 by using the tag ID of RFID tag 12, corresponding magnetic marker 10 (10A) can be identified, and its absolute position can be read. Also, by referring to database 550 by using the subject vehicle position estimated by inertial navigation or the like, the nearest magnetic marker 10 can be identified, and its absolute position can be read.

Control unit 55 is a circuit for control of sensor array 51, tag reader 52, inertial measuring unit 53, and so forth and for identifying (including identifying by estimation) the subject vehicle position (absolute position of the vehicle) by using an output from each of these units. Control unit 55 can perform two types of process as a process for identifying the subject vehicle position. A first process is a process when any tag-equipped marker 10A is detected. A second process is a process when any tag-unequipped marker 10B is detected.

### (Procedure for Using Marker System)

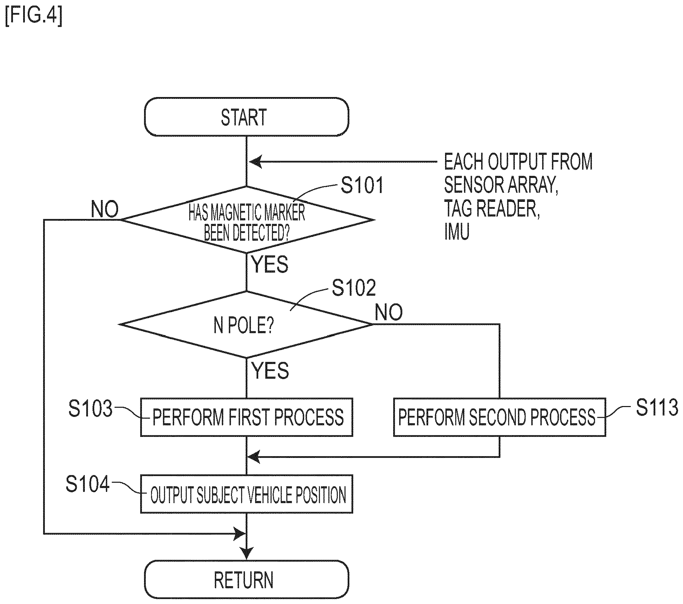

A procedure for vehicle 5 to identify the subject vehicle position by using marker system 1 is described with reference to a flow diagram of FIG. 4. Control unit 55 controls sensor array 51, tag reader 52, and inertial measuring unit 53, and repeatedly obtains an output from each unit.

When obtaining from sensor array 51 an output indicating that any magnetic marker 10 has been detected (S101: YES), control unit 55 determines whether the magnetic polarity of magnetic marker 10 is the N pole or the S pole (S102). When the magnetic polarity of detected magnetic marker 10 is the N pole, which is the magnetic polarity of tag-equipped marker 10A (S102: YES), control unit 55 performs the first process described further below to identify the subject vehicle position (S103). On the other hand, when the magnetic polarity of detected magnetic marker 10 is the S pole, which is the magnetic polarity of tag-unequipped marker 10B (S102: NO), control unit 55 performs the second process described further below to identify the subject vehicle position (S113) . Then, control unit 55 outputs the subject vehicle position identified by the first or second process toward an external device such as, for example, a navigation device (S104).

The first process (S103) is a process when any tag-equipped marker 10A is detected. Note that, as described above, when detecting any magnetic marker 10, sensor array 51 outputs the magnetic polarity and a lateral shift amount with respect to magnetic marker 10. In the first process, control unit 55 uses the tag ID of RFID tag 12 to identify corresponding magnetic marker 10 with reference to database 550, and reads its disposition position (absolute position). Then, with reference to the disposition position (absolute position) of magnetic marker 10, a position shifted by the lateral shift amount obtained from sensor array 51 is identified as the subject vehicle position (absolute position of the vehicle).

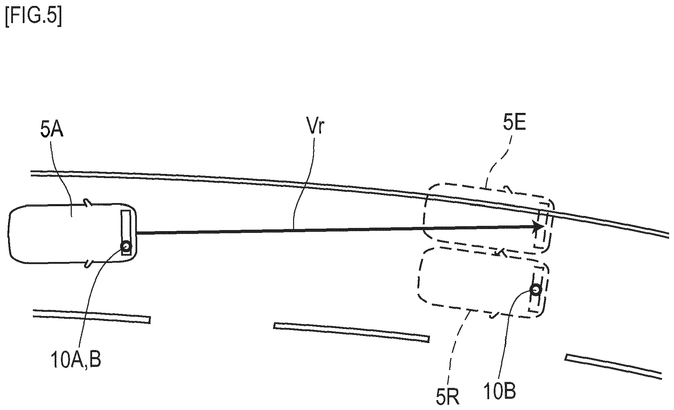

The second process (S113) is a process when vehicle 5 detects any tag-unequipped marker 10B on the right side in FIG. 5. In the second process, control unit 55 calculates estimated position 5E shifted by displacement vector Vr estimated by inertial measuring unit 53 with reference to subject vehicle position 5A identified at the time of previous detection of magnetic marker 10, irrespective of whether previous magnetic marker 10 is tag-equipped marker 10A or tag-unequipped marker 10B. Here, displacement vector Vr is a displacement vector estimated by inertial measuring unit 53 until vehicle 5 at subject vehicle position 5A detects tag-unequipped marker 10B described above.

Control unit 55 uses estimated position 5E to identify nearest magnetic marker 10 with reference to database 550. In the case of FIG. 5, tag-unequipped marker 10B on the right side in the drawing nearest from estimated position 5E is identified. Control unit 55 reads the disposition position (absolute position) of identified magnetic marker 10 (tag-unequipped marker 10B) from database 550. Then, control unit 55 identifies a position shifted by the lateral shift amount obtained from sensor array 51 with reference to the disposition position of this magnetic marker 10 as a subject vehicle position 5R.

In the use of this marker system 1, magnetic marker 10 detected as the N pole is sign 1M of tag-equipped marker 10A. Control unit 55 of vehicle 5 switches whether to perform the first process corresponding to tag-equipped marker 10A or perform the second process corresponding to tag-unequipped marker 10B in accordance with the magnetic polarity of magnetic marker 10. When the magnetic polarity of detected magnetic marker 10 is the S pole, even if receiving a tag wave, control unit 55 performs the second process without using the tag wave.

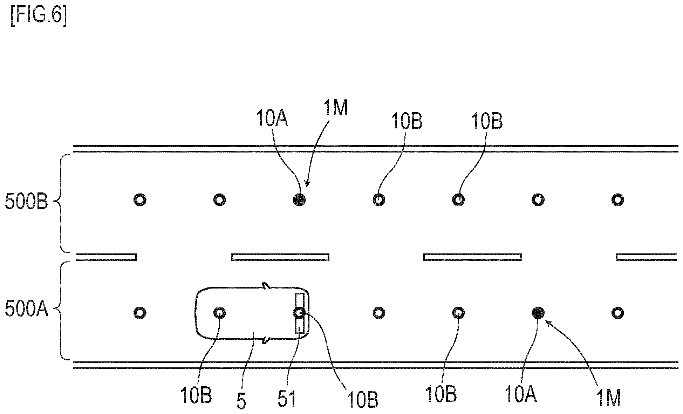

For example, when detecting tag-unequipped marker 10B (indicated by a hollow circle) on a subject lane 500A, there is a possibility that vehicle 5 in FIG. 6 is receiving a tag wave from tag-equipped marker 10A (indicated by a solid circle) on a nearby lane 500B. In marker system 1 of the present embodiment, since the magnetic polarity of magnetic marker 10 detected by vehicle 5 is the S pole, detected magnetic marker 10 can be identified as tag-unequipped marker 10B. In this case, since detected magnetic marker 10 is tag-unequipped marker 10B, there is no possibility that the tag wave being received is erroneously associated with detected magnetic marker 10.

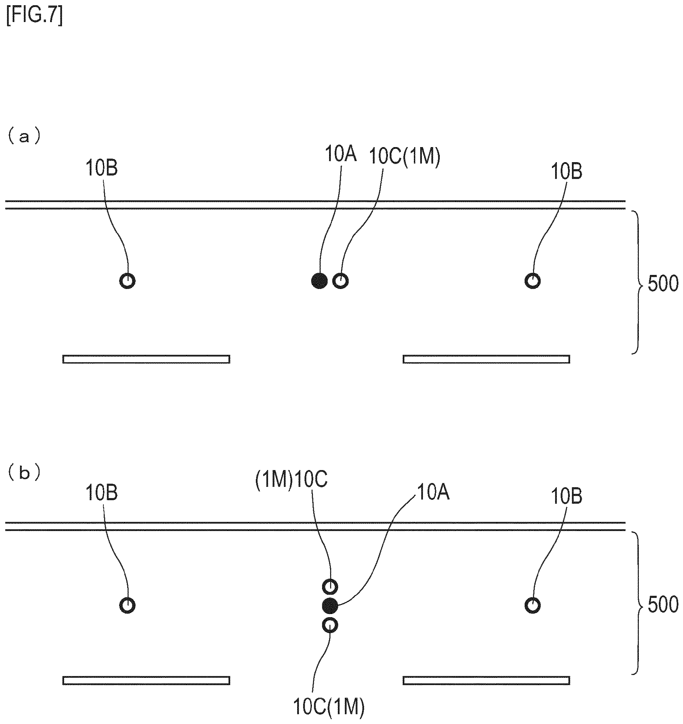

FIG. 7 depicts examples in which another magnetic marker 10C serving as sign 1M is arranged near tag-equipped marker 10A. In FIG. 7 (a), magnetic marker 10C as sign 1M is arranged at a position adjacent to tag-equipped marker 10A in a lane direction (corresponding to a forwarding direction of vehicle 5). Fig. 7(b) is an example in which magnetic markers 10C as signs 1M are arranged at both adjacent sides interposing tag-equipped marker 10A in a lane-width direction (corresponding to the width direction of vehicle 5). Note that magnetic marker 10C as sign 1M may be one adjacent in the lane-width direction. In this manner, the sign may be a magnetic marker as a magnetic sign detectable by using sensor array 51 (magnetic measuring part) included in the vehicle. A magnetic marker as a sign may be arranged so as to be adjacent to tag-equipped marker 10A.

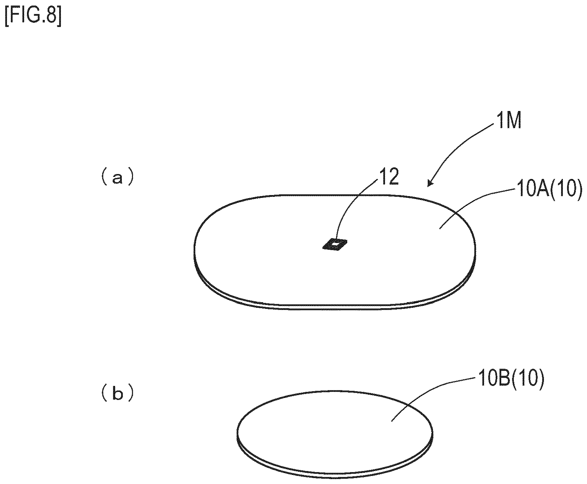

FIG. 8 depicts an example in which the shape is different between tag-equipped marker 10A and tag-unequipped marker 10B. While tag-equipped marker 10A exhibits an oval shape or strip shape, tag-unequipped marker 10B has a circular shape. By magnetically detecting the size in the longitudinal direction, it is possible to distinguish between tag-equipped marker 10A of FIG. 8(a) and tag-unequipped marker of FIG. 8(b). That is, in the configuration of FIG. 8, tag-equipped marker 10A itself exhibiting an oval shape or strip shape serves as sign 1M for distinguishing between tag-equipped marker 10A and tag-unequipped marker 10B. In this manner, the surface shape, which is a shape facing the vehicle side, is different between tag-equipped marker 10A and tag-unequipped marker 10B. Thus tag-equipped marker 10A itself different in shape from tag-unequipped marker 10B may serves as a sign.

Note that as a method of magnetically detecting the size of magnetic marker 10 in the longitudinal direction, there are a method of using a difference in a magnetic distribution in a two-dimensional area including magnetic marker 10, a method of using a difference in time of detecting magnetism of magnetic marker 10 while the vehicle is traveling, that is, time when sensor array 51 passes over magnetic marker 10, and so forth. In this manner, there may be a difference in size of tag-equipped marker 10A and tag-unequipped marker 10B in longitudinal direction corresponding to the traveling direction (lane direction) of the vehicle. In this case, a circuit for distinguishing between tag-equipped marker 10A and tag-unequipped marker 10B based on the magnetic distribution in the traveling direction is preferably provided to vehicle 5. For example, the circuit may be one for distinguishing between tag-equipped marker 10A and tag-unequipped marker 10B by performing threshold process regarding the length in a section including a time when magnetic marker 10 is detected, the section where magnetisms with a strength (magnitude) exceeding a threshold are continuously distributed in the traveling direction.

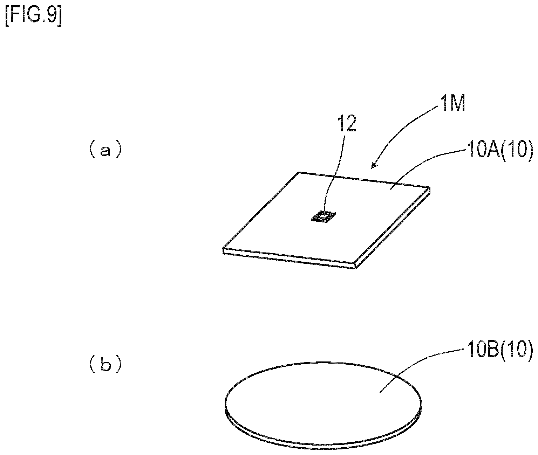

FIG. 9 depicts an example in which while tag-equipped marker 10A has a quadrilateral shape, tag-unequipped marker 10B has a circular shape. A difference can occur in a two-dimensional magnetic distribution between magnetic marker 10 having a quadrilateral shape and magnetic marker 10 having a circular shape. Therefore, tag-equipped marker 10A can be identified based on a two-dimensional magnetic distribution by magnetic marker 10 having a quadrilateral shape. That is, the magnetic marker 10 itself having a quadrilateral shape serves as sign 1M for distinguishing between tag-equipped marker 10A and tag-unequipped marker 10B. In this manner, the vehicle is only required to include a circuit for distinguishing between tag-equipped marker 10A and tag-unequipped marker 10B based on the magnetic distribution in the two-dimensional area including tag-equipped marker 10A or tag-unequipped marker 10B. For example, the circuit for distinguishing based on the magnetic distribution in the two-dimensional area may be a circuit for distinguishing between tag-equipped marker 10A and tag-unequipped marker 10B in accordance with the range size and shape of an area where magnetisms with a strength (magnitude) exceeding the threshold are distributed.

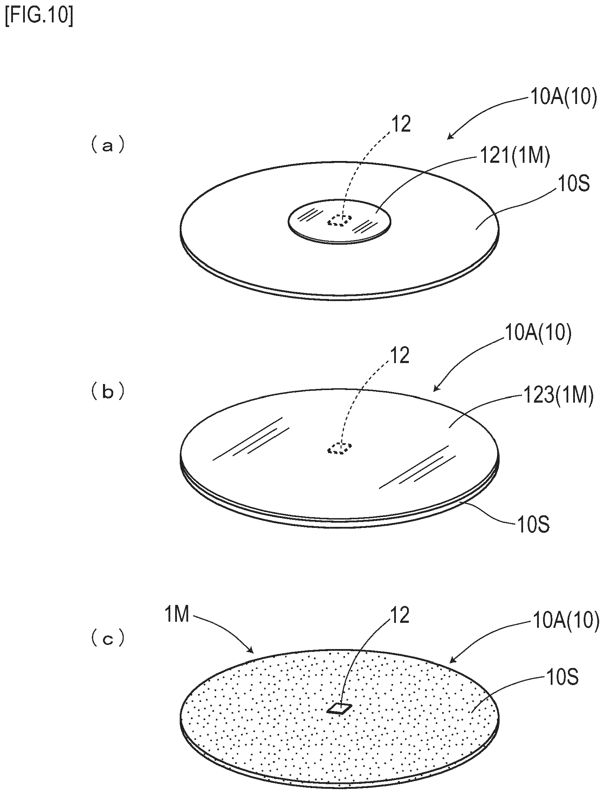

As in FIG. 10, tag-equipped marker 10A may be configured so as to reflect light. In this case, a difference in brightness in a taken image can occur between tag-equipped marker 10A and tag-unequipped marker 10B. The difference in brightness, that is, magnetic marker 10 itself which is brightly taken serves as sign 1M for distinguishing between tag-equipped marker 10A and tag-unequipped marker 10B. Note that the taken image may be an image taken by a camera oriented downward to take an image of the road surface where magnetic markers 10 are disposed or an image taken by a camera oriented forward to take an image of magnetic marker 10 positioned forward.

For example, as in FIG. 10(a), reflective patch 121 covering RFID tag 12 may be stuck onto the surface of tag-equipped marker 10A. Reflective patch 121 is preferably cut out from, for example, a reflective sheet not depicted. Alternatively, as in FIG. 10(b), reflective sheet 123 may be laminated on the entire surface of tag-equipped marker 10A. In these cases, reflective patch 121 or reflective sheet 123 can serve as sign 1M of tag-equipped marker 10A. Furthermore, as in FIG. 10(c), magnet sheet 10S may be adopted, which is a molded article made of a material obtained by kneading a reflective material such as alumina powder or beads and magnetic powder together. By disposing this magnetic marker 10 in a state of being exposed to a surface side of the road surface, magnet sheet 10S itself reflects light, and magnetic marker 10 itself can serve as sign 1M.

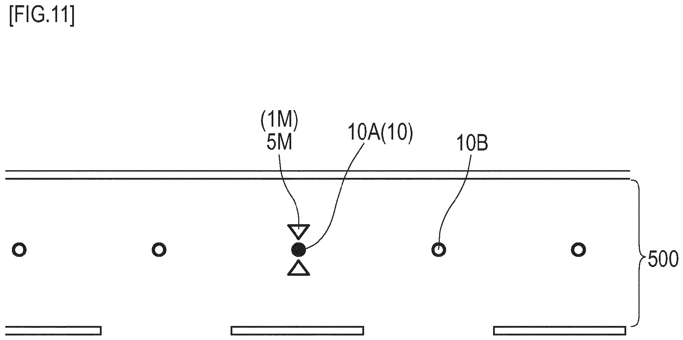

As in FIG. 11, marking 5M indicating tag-equipped marker 10A may be printed or the like onto the road surface. Marking 5M serves as sign 1M of tag-equipped marker 10A. By performing image processing or the like on a taken image of magnetic marker 10 and its surroundings, marking 5M can be relatively easily detected, and it is thereby possible to distinguish between tag-equipped marker 10A and tag-unequipped marker 10B.

The color or design pattern on the surface may be different between tag-equipped marker 10A and tag-unequipped marker 10B. A difference in color or design pattern on the surface of magnetic marker 10 can serve as a sign for distinguishing between tag-equipped marker 10A and tag-unequipped marker 10B. The difference in color or design pattern can be detected or the like, for example, by performing image processing or the like on a taken image of magnetic marker 10.

Note that the present embodiment exemplarily describes the configuration in which sign 1M is provided to tag-equipped marker 10A as described above to allow distinction from tag-unequipped marker 10B. In place of this configuration, a sign may be provided to tag-unequipped marker 10B, or different signs may be provided to both of tag-equipped marker 10A and tag-unequipped marker 10B. Note that as an image-like sign, a visually observable sign may be used, or a sign which is not visually observable but an image of which can be taken by a camera may be used, such as, for example, a sign which reflects or emits infrared light or ultraviolet light.

### (SECOND EMBODIMENT)

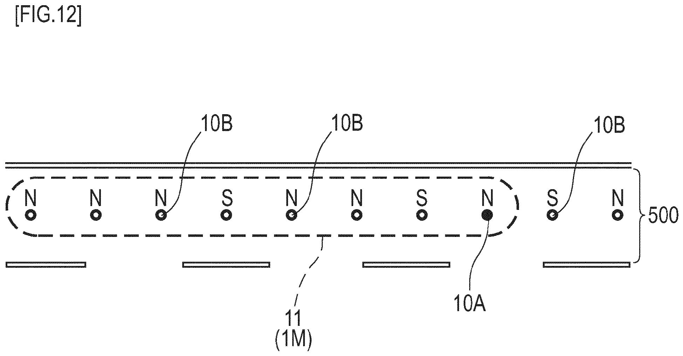

The present embodiment is an example in which, based on marker system 1 of the first embodiment, tag-equipped marker 10A is identified by code information indicated by a combination of magnetic polarities of two or more magnetic markers 10. Details of this are described with reference to FIG. 12. Note that in the drawing, tag-equipped marker 10A is indicated by a solid circle and tag-unequipped markers 10B are each indicated by a hollow circle.

The code information is information formed of a combination of magnetic polarities of a total of eight magnetic markers 10 including tag-equipped marker 10A and seven magnetic markers 10 positioned on an upstream side. This code information is information of eight bits in which the N pole is indicated as bit 1 and the S pole is indicated as bit zero. In the present embodiment, tag-equipped marker 10A and seven magnetic markers 10 positioned on the upstream side form information providing part 11. Information providing part 11 which provides predetermined code information to a vehicle side serves as sign 1M for distinguishing between tag-equipped marker 10A and tag-unequipped marker 10B. The traveling vehicle can read the code information by detecting the magnetic polarities of magnetic markers 10 configuring information providing part 11 sequentially from the upstream side.

In FIG. 12, information providing part 11 as sign 1M is affixed to tag-equipped marker 10A in a mode of including tag-equipped marker 10A. In place of this, information providing part 11 may be configured of seven magnetic markers 10 on an upstream side of tag-equipped marker 10A. In this case, with the arrangement in which information providing part 11 is adjacent on an upstream side with respect to tag-equipped marker 10A, information providing part 11 is affixed to tag-equipped marker 10A.

Note that magnetic marker 10 may be disposed with a designated magnetic polarity so that magnetic markers 10 of information providing part 11 represent code information defined in advance. Alternatively, it may be configured that after magnetic markers 10 are disposed without distinction as to magnetic polarity, the magnetic polarities of magnetic markers 10 of information providing part 11 are each identified by magnetic measurement or the like, a circuit for storing a combination of the identified magnetic polarities is provided, and the combination of the magnetic polarities stored in that circuit is set as the above-described code information. Alternatively, it may be configured that after each magnetic marker 10 is disposed, each magnetic marker 10 is magnetized so that the combination of magnetic polarities of magnetic markers 10 of information providing part 11 represents code information defined in advance.

In place of the code information in accordance with the combination of magnetic polarities of magnetic markers 10, code information readable from two-dimensional code such as a barcode or QR code (registered trademark) printed on the road surface may be used.

Note that the other configurations and the operation and effects are similar to those in the first embodiment.

In the foregoing, while specific examples of the present invention are described in detail as in the embodiments, these specific examples merely disclose examples of technology included in the scope of the claims. Needless to say, the scope of the claims should not be restrictively construed based on the configuration, numerical values, and so forth of the specific examples. The scope of the claims includes techniques acquired by variously modifying, changing, or combining as appropriate the above-described specific examples by using known techniques, knowledge of a person skilled in the art, and so forth.

### REFERENCE SIGNS LIST

- 1: marker system
- 1M: sign
- 10: magnetic marker
- 10A: tag-equipped marker
- 10B: tag-unequipped marker
- 10S: magnet sheet (magnet)
- 11: information providing part
- 12: RFID tag (wireless tag)
- 5: vehicle
- 500: lane
- 51: sensor array (magnetic measuring part)
- 510: detection processing circuit
- 511: magnetic sensor
- 52: tag reader
- 53: inertial measuring unit (IMU)
- 55: control unit
- 550: database

## Claims

1. A marker system which includes a plurality of magnetic markers disposed on a road surface for driving assist control of a vehicle including automatic traveling control, wherein
a wireless tag capable of outputting information via wireless communication is affixed to a partial magnetic marker which is part of the plurality of magnetic markers, and
the marker system comprises a sign for distinguishing between the partial magnetic marker with the wireless tag affixed thereto and another magnetic marker of the plurality of magnetic markers except the partial magnetic marker.

2. The marker system in claim 1, wherein the sign is a magnetic sign that can be detected by using a magnetic measuring part included in the vehicle.

3. The marker system in claim 1, wherein the sign is a magnetic marker as a magnetic sign that can be detected by using a magnetic measuring part included in the vehicle, and the magnetic marker as the sign is arranged as being adjacent to the partial magnetic marker.

4. The marker system in claim 1, wherein a shape facing a vehicle side is different between the partial magnetic marker and the other magnetic marker, and the partial magnetic marker, which is different in shape from the other magnetic marker, itself serves as the sign.

5. The marker system in claim 4, wherein a size in a longitudinal direction corresponding to a forwarding direction of the vehicle is different between the partial magnetic marker and the other magnetic marker, and
the marker system comprises a circuit for distinguishing between the partial magnetic marker and the other magnetic marker based on a magnetic distribution in the forwarding direction of the vehicle.

6. The marker system in claim 4, wherein the marker system comprises a circuit for distinguishing between the partial magnetic marker and the other magnetic marker based on a magnetic distribution of a two-dimensional area including the partial magnetic marker or the other magnetic marker.

7. The marker system in claim 1 or 2, wherein the sign is an image-like sign that can be detected in a taken image of the magnetic markers by an image-taking camera included in the vehicle.

8. The marker system in claim 7, wherein the magnetic markers are molded articles made of a material containing a powder-like reflective material and magnetic powder, and are disposed in a state of being exposed to a surface side of the road surface.

9. The marker system in any one of claims 1, 2, and 7, wherein the sign is an information providing part which provides predetermined code information to a vehicle side, and the information providing part is affixed to the partial magnetic marker.

10. The marker system in claim 9, wherein the information providing part is a barcode or a two-dimensional code printed on the road surface.

11. The marker system in claim 10, wherein the information providing part includes two or more magnetic markers, and the code information is information formed of a combination of magnetic polarities of the two or more magnetic markers.

12. The marker system in claim 11, comprising a circuit for storing the combination of magnetic polarities identified after disposition on the road surface of the two or more magnetic markers included in the information providing part.

13. A magnetic marker detection method for detecting a magnetic marker disposed on a road surface for driving assist control of a vehicle including automatic traveling control,
a wireless tag capable of outputting information via wireless communication affixed to a partial magnetic marker which is part of a plurality of magnetic markers disposed on the road surface, the method comprising:
a process of magnetically detecting the magnetic marker;
a process of obtaining information outputted from the wireless tag affixed to the magnetic marker; and
a process of detecting a sign provided to distinguish between the partial magnetic marker with the wireless tag affixed thereto and another magnetic marker of the plurality of magnetic markers except the partial magnetic marker, wherein
when the magnetic marker is detected and the sign is detected, information obtained from the wireless tag is associated with the detected magnetic marker.

14. The magnetic marker detection method in claim 13, wherein the sign is a magnetic sign that can be detected by using a magnetic measuring part included in the vehicle.

15. The magnetic marker detection method in claim 13 or 14, wherein the sign is an image-like sign that can be detected in a taken image of the magnetic markers by an image-taking camera included in the vehicle.

16. The magnetic marker detection method in any one of claims 13 to 15, wherein the sign is an information providing part which provides predetermined code information to a vehicle side, and the information providing part is affixed to the partial magnetic marker.

17. The magnetic marker detection method in claim 16, wherein the information providing part includes the two or more magnetic markers, and the code information is information formed of a combination of magnetic polarities of the two or more magnetic markers.
